# EUROPEAN PATENT APPLICATION

(11) **EP 2 211 089 A1**
(43) Date of publication of application: **28.07.2010**
(21) Application number: 09001044.8
(22) Date of filing: 26.01.2009
(51) Int. Cl.: F21V 7/00, F21V 14/06

(54) **Apparatus and method for outputting a mixed-colored light beam**

(71) Applicant: GLP German Light Products GmbH, 76307 Karlsbad (DE)
(72) Inventor: Salm, Markus, 66265 Heusweiler (DE)
(74) Representative: Zinkler, Franz

(57) **Abstract**

An apparatus (10) for outputting a mixed-colored light beam (12) comprises a light mixer (14) and a lens (28). The light mixer (14) is adapted to mix light (16) received from at least two light emitters (18, 20), each of the two light emitters (18, 20) having a differently colored (R,G) light output (22, 24), wherein the mixer (14) is adapted to mix the received light (16) so that a mixing degree of mixed light (26) output by the mixer (14) is at least 50%, wherein a mixing degree of 100% is a fully mixed light. The lens (28) is spaced apart from the light mixer (14), wherein the lens (28) is attached to a lens holder (30) in such a way that the lens (28) can be moved (32) with respect to the light mixer (14) in order to vary a size of the mixed-colored light beam (12) output by the lens (28).

## Description

Embodiments of the invention relate to an apparatus and a method for outputting a mixed-colored light beam. Embodiments of the invention are related to the fields of optics and the mixing of light. Further embodiments of the invention relate to mixing light being emitted by power light emitting diodes (Power LEDs).

High power light emitting diodes are used for general lighting applications, for example spots for stage lighting, TV screens, traffic lights and signals, message displays, automotive break lights or rear light clusters or emergency vehicle lighting. LED modules provide LEDs in a protective and mountable casing. LED modules are available in a wide range of shapes, sizes and colors. RGB systems or RGB LEDs are utilized to produce white light by mixing differently colored light emitted by the red (R), green (G) and blue (B) light of the individual LEDs. Depending on the mixture degree of the RGB light components of the individual light emitting diodes (LED), multiple colors may be produced.

A mixture of the light emitted by the LEDs is achieved by an optical super-position of the light rays emitted by the LEDs. Depending on the distance to the LED module and on the sizes and relative distances of the LEDs with respect to each other, a mixed light beam has a varying mixing degree, wherein a mixing degree of 100% corresponds to a fully-mixed light. A fully mixed light means, for example, the perception of a homogenous white colored light beam being produced by a red, green and blue light beam.

U.S. Pat. Application No. 2008/0266893 A1 describes a lighting module with compact color mixing and collimating optics. It provides a compact format lighting module that can provide a desired level of mixing and collimating of light generated by multiple light-emitting elements within the lighting module. The lighting module comprises two or more light-emitting elements for generating light having one or more colors, wherein the light-emitting elements can be configured into a closely packed array. The module further comprises a primary optical system enabling light extraction from the light-emitting elements to which it is optically coupled. A secondary optical system that is optically coupled to the primary optical system is configured to be compatible with the primary optical system and provides a means for mixing and collimating the light extracted from the two or more light-emitting elements.

LED modules emit light and produce a light beam, which is dependent on the geometry of the LED module and the LED package. On a projection object within a predefined distance towards the LED module, a fixed sized light beam is projected. The mixing degree or mixing quality, respectively depends on the distance between the projection object and the LED module and on the distances between the LEDs integrated on the LED module. In a longer distance to the LED module the mixed-colored light beam is perceived of having one color, while at a position close to the LED module a number of differently colored light beams are perceived. A close distance of the individual LEDs of the LED module prompts an observer perceive a homogenous colored light beam while a great distance results in a perception of separate light beams of different color.

There is a need for mixing the light beams of multiple-colored LEDs with a high mixing degree and with a mixed-colored light beam of variable size.

This technical problem is solved by embodiments of the invention providing an apparatus for outputting a mixed-colored light beam according to claim 1.

The apparatus comprises a light mixer being adapted to mix light received from at least two light emitters, each of the two light emitters having a differently colored light output, wherein the mixer is adapted to mix the received light so that a mixing degree of mixed light output by the mixer is at least 50%, wherein a mixing degree of 100% is a fully mixed light, and a lens being spaced apart from the light mixer, wherein the lens is attached to a lens holder in such a way that the lens can be moved with respect to the light mixer in order to vary a size of the mixed-colored light beam output by the lens.

The technical problem is further solved by a method for outputting a mixed- colored light beam according to claim 11. The method comprises "mixing light received from at least two light emitters, each of the two light emitters having a differently colored light output to obtain mixed light, such that a mixing degree of the mixed light is at least 50%, wherein a mixing degree of 100% is a fully mixed light" and "varying a size of a light beam of the mixed light by moving a lens within the light beam of the mixed light".

Embodiments of the invention provide a light mixer mixing the light of at least two light emitters with a high mixing degree. By a lens, which can be moved towards the light mixer, a size of the mixed-colored light beam may be varied. Depending on a position of the lens with respect to the light mixer, a light beam of mixed color is projected onto a projection object, such that the size of the light beam is adjustable. Embodiments of the invention may mix the light produced by high power LED chipsets comprising 2, 3 (e.g. RGB-components) or more individual LEDs of different wave length characteristics.

With reference to the accompanying Figs. 1 to 8b, embodiments of an apparatus and a method for outputting a mixed-colored light beam will be described.
- Fig. 1: shows a schematic diagram of an apparatus for outputting a mixed-colored light beam according to an embodiment of the invention;
- Fig. 2a: shows a spectral diagram of three LED emitters producing mixed light with a mixing degree of about 25%;
- Fig. 2b: shows a spectral diagram of the three LED emitters depicted in Fig. 2a when a light mixer of an optimum mixing degree of 100% is used;
- Fig. 2c: shows a spectral diagram of the three LED emitters depicted in Fig. 2a when a light mixer of a mixing degree of about 50% is used;
- Fig. 3: shows a sectional view of an apparatus for outputting a mixed-colored light beam according to another embodiment of the invention;
- Fig. 4: shows a table illustrating a dependency between the position x of the lens with respect to the light mixer and the beam size of the mixed-colored light beam;
- Fig. 5: shows an apparatus comprising a plurality of light mixers for outputting a mixed-colored light beam according to another embodiment of the invention;
- Fig. 6: shows a flow chart of a method for outputting a mixed-colored light beam according to an embodiment of the invention;
- Fig. 7a: shows a sectional view of a lens holder according to an embodiment of the invention;
- Fig. 7b: shows a top view of the lens holder depicted in Fig. 7a;
- Fig. 8a: shows a sectional view of a lens holder according to another embodiment of the invention; and
- Fig. 8b: shows a top view of the lens holder depicted in Fig. 8a.

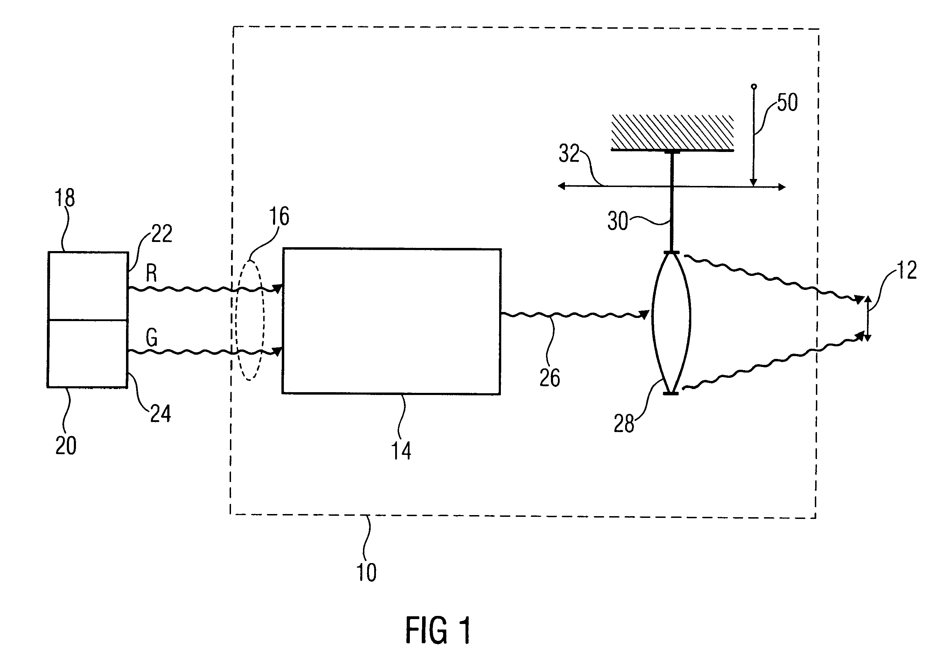

Fig. 1 shows an apparatus 10 for outputting a mixed colored light beam 12 comprising a light mixer 14 and a lens 28. The light mixer 14 is used to mix light 16 which is received from two light emitters 18, 20, wherein the light 16 comprises light beams R,G of different color. The lens 28 is spaced apart from the light mixer 14 and is attached to a lens holder 30 such that the lens 28 can be moved with respect to the light mixer 14. By an axial movement 32 of the lens 28 in direction to an optical axis x of the apparatus 10, a mixed colored light beam 12 is varied.

The two light beams R,G may be, for example, red and green light output by a first light emitter 18 and a second light emitter 20. Both light emitters 18, 20 have differently colored light outputs 22, 24. For mixing light 16, at least two different colored light components R,G are provided to the light mixer 14. A third light component B, for example for providing blue light, may also be provided to the light mixer 14 in order to mix the red, green, blue (R,G,B) components to obtain mixed light 26 of white color. Also, more than three light components may be provided to the light mixer 14, for example a fourth light component A providing an amber light component.

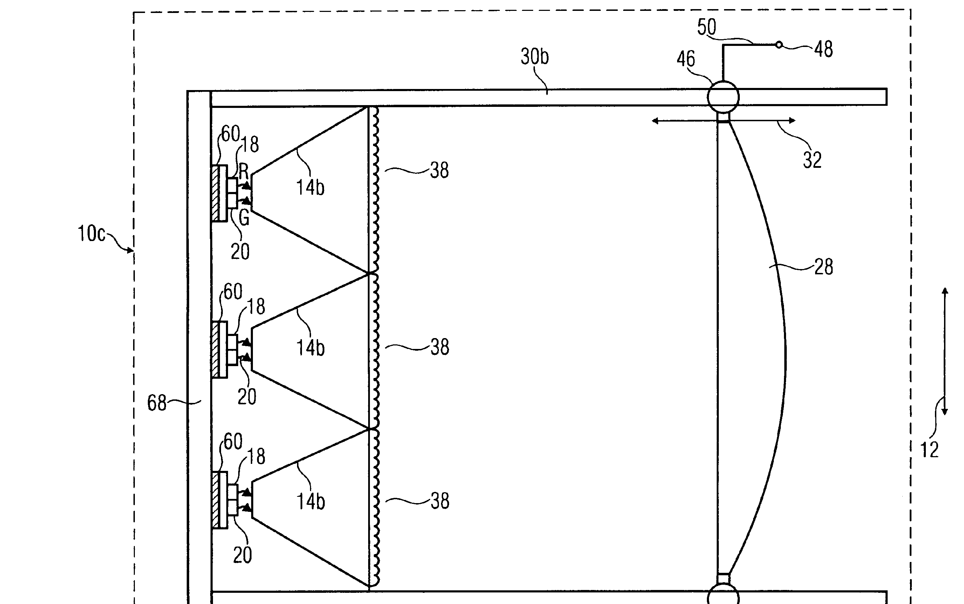

The mixing degree is a measure for the mixture of the mixed light 26 generated by the light mixer 14. In the case of three light components R,G,B applied to the mixer 14, a light beam 12 which may be perceived as white light corresponds to a fully mixed light. This corresponds to a broad frequency spectrum in which all of the frequencies perceivable as light are equally distributed. The mixing degree within a defined spectrum limited by a lower and an upper frequency may be defined as the ratio of a mean intensity and a maximum intensity times 100%. Diagrams for illustrating the mixing degree are depicted in Figs. 2a, 2b and 2c.

The lens 28 is attached to a lens holder 30 which can move the lens 28 in a moving direction 32 with respect to the light mixer 14. The moving direction 32 may be a straight movement in direction to or in opposite direction to the mixed light 26. It may also be a non-straight movement, for example a sideways-movement or a combined rotational and transversal movement. A control signal 50 may initiate the axial movement 32. The control signal 50 may be an electrical signal for an electrically driven axial movement 32, for example by an electrical actuator. The control signal 50 may be a trigger signal for a manual opening of the lens holder 30, manual moving 32 of the lens 28 to a desired position and manual closing of the lens holder 30.

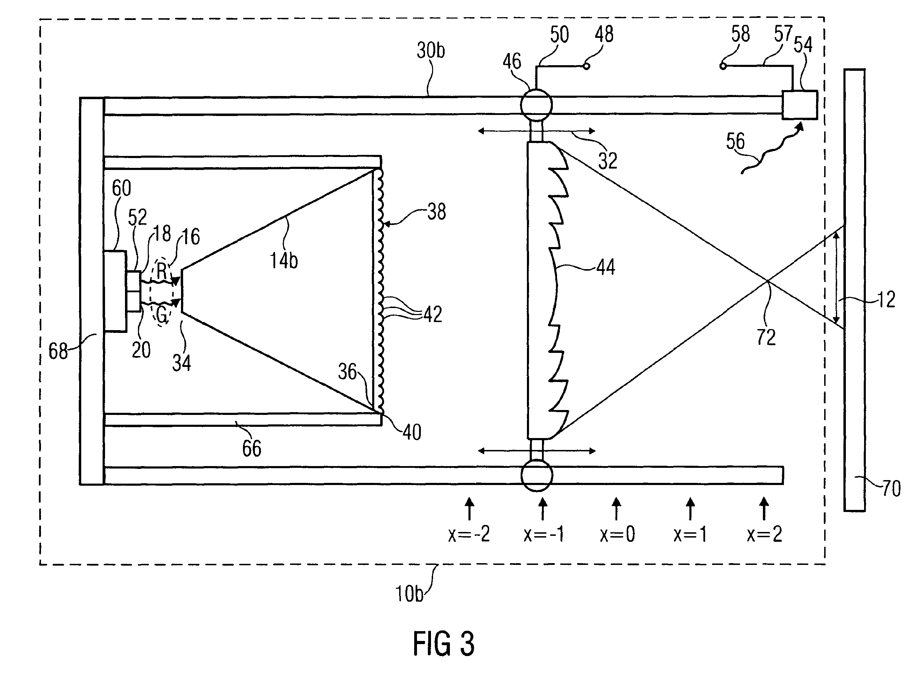

Depending on the position of the lens 28, a different size of the mixed colored light beam 12 on a projection object may be generated. The dependency between movement position of the lens 28 and size of the colored light beam 12 is illustrated by a table depicted in Fig. 4. The relation depends on the kind of the lens 28 and its focal point. Preferred embodiments of the invention use a converging lens 28 with collective characteristics. Other embodiments of the invention use a concave lens with diverging characteristics. Further embodiments of the invention may use a combination of convex and concave lenses to achieve better control of the size of the mixed colored light beam 12. The lens holder 30 may be used for holding the combination of lenses. The control signal 50 may be configured to control the different movements 32 of the individual lenses. In a preferred embodiment of the invention, the lens 28 is a Fresnel lens. Due to the special form of the Fresnel lens this lens may additionally improve the mixing degree.

Fig. 2a shows an intensity diagram depicting intensities of three differently colored (R,G,B) light components. A first (B) component illustrates the spectral component of a blue light LED which is emitting light of a wave length between about 450 and 500nm. A second (G) component illustrates a spectral component of a green light LED which emits green light of a wave length between about 500 and 570nm. A third (R) component illustrates the spectral component of a red light LED, which emits red light of a wave length between about 610 and 690nm. The horizontal axis of the diagram depicts the wavelength of the emitted light components in nanometers, while the vertical axis depicts the intensity of the emitted light components in arbitrary chosen counting units.

The diagram depicts a mean intensity "Mean" and a maximum intensity "Max" of the three light components B,G,R. The mean intensity "Mean" can be calculated by averaging the intensity over a wavelength interval of interest corresponding to the interval of visible light ranging from about 420nm to about 690nm. Performing this calculation results in about 1000 counts. The maximum intensity "Max" can be determined by finding the maximum of the intensity. Doing this results in a maximum intensity of about 4000 counts. A simple measure to define the mixing degree is to divide the mean intensity by the maximum intensity and to represent the result as a percentage value. Applying this to the intensity spectral distribution as depicted in Fig. 2a, results in a mixing degree of 25%. Such a low mixing degree corresponds to a poorly mixed light in which the three color components are still detectable as individual color components by an observer. The human observer has the undesired impression of three neighbored light spots instead of a homogenous monochromatic light spot.

Fig. 2b shows an intensity diagram of optimally mixed light 26, which results in a mixing degree of 100%. The spectrum of the mixed light 26 is equally distributed within the range of visible light (ranging from about 420 nm to about 690nm). The maximum intensity "Max" is equal to the mean intensity "Mean" such that a calculation of the mixing degree results in 100%. The optimally mixed light or fully mixed light 26, respectively, may be perceived as a homogeneous white light spot.

Fig. 2c shows an intensity diagram of the three light components B,G,R depicted in Fig. 2a after having passed a mixer 14 having a mixing degree of 50%. The maximal intensities are smaller than the maximal intensities as depicted in Fig. 2a and the mean intensity "Mean" is larger than the original mean intensity depicted in Fig. 2a. With a mean intensity of about 1500 counts and a maximum intensity of about 3000 counts, a mixing degree of 50% is obtained. An observer may perceive this spectrum as inhomogeneous white light having distortions at the frequencies indicating the individual color components B,G,R. A high mixing degree is correlated to a highly uniform spectral distribution showing small differences between maximum and mean intensities. A low mixing degree is correlated to a non-uniform spectral distribution showing large differences between maximum and mean intensities.

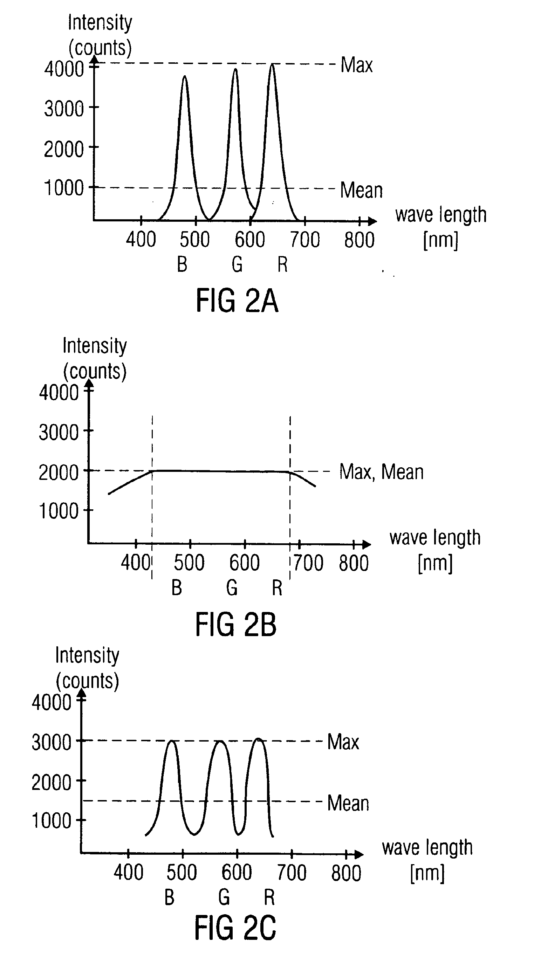

Fig. 3 shows a sectional view of an apparatus 10b for outputting a mixed colored light beam 12 according to an embodiment of the invention. The apparatus 10b comprises a light mixer 14b which corresponds to the light mixer 14 as depicted in Fig. 1 and a lens 44 which is formed as a Fresnel lens and corresponds to the lens 28 as depicted in Fig. 1. The light mixer 14b is a light pipe or light guide which may be formed as a structure of an increasing cross sectional area from a light reception end 34 to a light output end 36. The light pipe 14b may have a tapered form, for example conical, parabolic, hyperbolic, pyramidal or some other geometrical form with increasing cross-sectional area.

The axial cross sectional profile can taper towards the light output end 36 having square, hexagonal or octagonal cross sections. The curvature of the axial cross sectional profile may be parabolic, elliptic or hyperbolic. Alternatively, the axial cross sectional profile may comprise individual straight segments or/and individual curved segments. The increasing cross-sectional area is used to concentrate light 16 passing through the light pipe 14b. The light 16 is focussed to an outlet of the light pipe 14b arranged at the light output end 36. The light 16 passing the light pipe 14b may be reflected by the walls of the light pipe 14b such that nearly no or only little energy is lost.

However, the light pipe 14b may also have a non-tapered form, for example parallel or nearly parallel side walls ranging from the light reception end 34 to the light output end 36, which ends may be squared, rectangular, round, hexagonally or octagonally formed, for example. The walls of the light pipe 14b are highly reflective to avoid an absorption of light by the walls and to assist in beam shaping and color mixing. The wall surface or parts of the wall surface may be optically active, for example by a phosphor coating. A reflective coating or a mirrored internal surface may provide for a desired level of reflectivity. The reflective coating may be made of a highly reflective material, for example protective aluminum or protective silver.

The light mixer 14b or the light pipe, respectively is formed of a material having a refraction index which is higher than a refraction index of air, i.e., a refraction index higher than 1. The light mixer 14b may comprise, for example, walls manufactured of glass or plastics, e.g., polycarbonate or solid acrylic to reflect the light based on total or nearly total internal reflection and may be filled with gas. The gas may be under pressure, such that a high refraction index of the mixer 14b with respect to the refraction index of air is achieved. The walls of the light mixer 14b may be coated, for example at the outer side facing the air, by a highly refractive coating material to achieve the high refraction index of the mixer 14b.

The light pipe or light guide may be formed of solid or hollow material. The light mixer 14b is designed to minimize the number of times light is reflected when traveling through the light mixer 14, as each reflection reduces the light intensity, and still being mixed with a high mixing degree.

To facilitate manufacturing, for example, if the size of the light mixer 14b is large, the light mixer 14b may comprise more than one part which may be individually manufactured. For example, a hollow light mixer 14b may be produced by manufacturing e.g. six or any other adequate number of adequate formed mirrors or connecting them, e.g. by gluing together or soldering their edges, such that their mirroring sides form the inner walls of the light mixer 14b. Alternatively, a solid light mixer 14b may comprise two or more solid glass or plastic blocks to be connected to a solid light pipe.

Alternatively, the lens 44 may be formed as a lens array or a micro-lens array, for example a Fresnel lens array. The lens 44 or the lens array may be formed as a plano-convex lens, a dome lens or a biconvex lens and may have an aspheric or biconvex surface, or shaped to any form required to assist in beam shaping. The surface of the lens 44 or the lens array can be textured, micro-structured or patterned in any structure to aid in color mixing. The lens 44 or the lens array can be manufactured from any one or more of a plurality of materials, for example glass, plastic, polycarbonate, acrylic or optical silicone.

The lens 44 or the lens array may create a rotationally symmetric beam, such as a circular light spot, a non-rotationally symmetric beam, such as an elliptic beam, a squared light beam or a beam formed as a line.

In a further embodiment, the lens 44 or the lens array can be moved between inside and outside of the optical path which is defined by the x-axis. The movement may be controlled by a lens control signal. Alternatively, a plurality of lenses 44 or lens arrays are individually controllable by the lens control signal, such that they move between inside and outside of the optical path upon activation by the lens control signal. By using different alternative lenses 44 or lens arrays which may be motor-driven moved inside or outside the optical path, different beam characteristics of the mixed colored light beam 12 may be achieved.

In a further embodiment, the lens 44 or the lens array is manufactured in two or more pieces which may be moved in the optical path. The movement is controlled by the lens control signal. The two or more pieces of the lens 44 of the lens array may be hinged, folded, pushed or moved in any other kind into the optical path, for example in the manner of a double wing sliding door or a flap gate. When the lens 44 or lens array is moved outside the optical path, the apparatus 10b may be operated as a wide angle beam former without additionally absorbing light by the lens 44.

The mixer 14b comprises a mixing structure 38 at an end 40 facing the lens 44. The mixing structure 38 is used to mix the light 16 passing the light output end 36. The mixing structure 38 is formed as a diffuser having a plurality of lens features 42 which are used for mixing the light 16. In one embodiment, the lens features 42 are small convex lenses arranged in an array like structure at the end 40 facing the lens 44. In another embodiment the mixing structure 38 is a perforated glass or transparent plastic plate, wherein the perforations are used to disperse light. The perforations may be formed inside the glass or plastic plate or on the top or bottom of the glass or plastic plate. The perforations may have a conical, pyramidal or spherical form.

The lens features 42 may be diffractive, holographic, reflective or diffuse elements or combinations thereof formed of glass, plastic, silicone, polycarbonate or any other optical active material. The lens features 42 may be fluid micro lenses comprising an optically active material changing its refraction index in the presence of an electric field which may be controlled by a lens feature control signal.

Although in this embodiment the mixing structure 38 is attached at the end 40 facing the lens 44, in other embodiments the mixing structure 38 may be placed anywhere along an optical path of the light 16 ranging from the light emitters 18, 20 to the mixed colored light beam 12, where it is optically appropriate and mechanically attachable. The mixing structure 38 may, for example, be attached to the light pipe 14b, e.g. inside the light pipe 14b, or may be attached to the lens holder 30b, e.g. at a light reception side or a light emitting side of the lens 44.

The mixing structure 38 is formed to adjust the shaping and the mixing of the mixed colored light beam 12. A rotationally symmetric light beam may be changed to a non-rotationally symmetric light beam, for example by using holographic diffusing lens features 42 or vice versa.

Further on the mixing structure 38 may be used to increase or decrease the beam angle or to adjust the beam distribution to application specific requirements. A rotationally symmetric or non-rotationally symmetric light beam, a line of light, a spot of light, a square of light or any other geometric form of light may be formed by the mixing structure 38.

Embodiments of the invention are not limited to a single mixing structure 38. A plurality of mixing structures 38 providing a plurality of optical transformations may be positioned replacably or fixed in the optical path of the light 16, such that the mixing structures 38 which may be moved in the optical path of the light 16 cooperate to produce the desired light effects. The movement of the plurality of mixing structures 38 may be controlled by a mixing structure control signal.

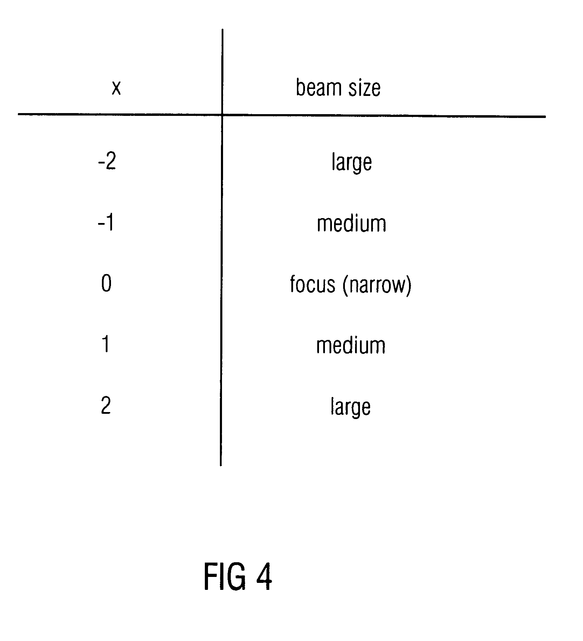

The light mixer 14b is attached to a light mixer holder 66 which is arranged on a base plate 68. The base plate 68 is mountable, for example for an installation at a wall or a ceiling or in a lamp. The lamp can be a moving head being used for moving the apparatus 10b in different directions according to a movement control. The light mixer holder 66 may hold the light mixer 14b at the light output end 36 or at the end 40 facing the lens 44. The light mixer holder 66 has such a form that arraying of different light mixers 14b is supported. For example, the light mixer 14b may have a form of a pyramid and the light mixer holder 66 may comprise four rods for a stable fixture of the mixer 14b at the four base edges. By such a pyramidal form a plurality of light mixers 14b may be arrayed in an apparatus 10b as depicted in Fig. 5. Other forms are also be possible, for example, having a hexagonal, triangular or round base, wherein the base is facing the light output end 36.

The light pipe 14b is attached to the light mixer holder 66 such that the light 16 emitted by the light emitters 18, 20 is directed to the light reception end 34 of the light pipe 14b. In this embodiment of the invention, the light emitters 18, 20 comprise a window through which the light 16 is emitted. The light mixer 14b may be attached with its light reception end 34 directly on the window of the light emitters 18, 20 such that the light 16 emitted through the window of the light emitters 18, 20 reaches the light reception end 34 without producing a significant amount of leakage light. An optical contact area between the window of the light emitters 18, 20 and the light reception end 34 of the light pipe 14b may be coated by or encapsulated in an encapsulation material with a predefined optical refraction index, for example an optical silicone material having a refraction index matching the refraction index of the light emitters 18, 20 or in between the refraction index of the light emitters 18, 20 and the light pipe 14b.

The encapsulation material can have a refraction index of about 1.5 to 1.7, for example. The encapsulation material can be coated with a coating material providing an antireflective coating to protect the light 16 from leaking through the encapsulation material. Alternatively, the surface of the encapsulation material can be micro-structured, textured or patterned, for example by forming an array of micro-lenses or other regular or irregular structures to avoid light from passing the encapsulating material, to enhance the light extraction from the light emitters 18, 20 to the light pipe 14b and/or to aid in color mixing the light 16.

The lens holder 30b comprises an actuator 46 for moving the lens 44 in the moving direction 32. Depending on the movement which may be described by the Cartesian (x) coordinate directed in the moving direction 32, a colored light beam 12 at a projection object 70 increases or decreases. A correspondence table illustrating the correspondence of movement position (x) of the actuator 46 relative to the lens holder 30b and size of the colored light beam is depicted in Fig. 4.

The actuator 46 is controlled by a control signal 50 received at a control input 48 of the lens holder 30b. The lens holder 30b may be mounted on the base plate 68, such that a moving of the base plate 68 moves the light mixer 14b and the lens 44 in the same direction. The lens holder 30b may comprise two or more rods or sticks with a thread, e.g., a screw thread, such that the actuator 46 may move in the thread in the axial moving direction 32. An axial movement may, for example, start at position x = -2 and end at position x = 2. The axial movement 32 may be initiated by the control signal 50 received at the control input 48. Also, a mechanical axial movement 32 by an opening of a mechanical locking mechanism is possible such that after a subsequent manual axial movement 32 to the desired position x, the actuator 46 is locked again at the desired position. Also, different electrical drives may be used for moving the actuator 46 with respect to the lens holder 30b.

In a further embodiment, the lens 44 can be a fluid lens with controllable focal length, which fluid length may be made of one or more electroactive materials, for example, which adapt their shape according to an applied electrical field controlled by the control signal 50.

The control signal 50 may control a voltage applied to one or more electrodes in or beneath the lens 44 to create the electrical field under which the one or more electroactive materials shape to form an optical material of adjustable focal length. The electroactive materials can be such as a liquid crystal material or another material changing its refraction index in the presence of an electrical field.

The apparatus 10b further comprises an array 52 of light emitters 18, 20 arrayed with respect to the light reception end 34 of the mixer 14b. The light emitters 18, 20 may be LED emitters arranged in a package which is designed to focus the light beams R,G of the LED emitters in the direction of the light mixer 14b. The array 52 of LED emitters may be integrated on a chip 60 which is used for controlling the light characteristics, emitted by the LEDs. The chip 60 has a power supply input for receiving the power for driving the LED emitters 18, 20. The LED emitters 18, 20 may be controlled by a pulse width modulation or a forward current adjusting. Power may be applied periodically or intermittently to control a dimming or color mixture degree of the light R,G emitted by the light emitters 18, 20. The chip 60 may have a modulation rate higher than approximately 1000 Hz. A duty cycle may, for example, be greater than 15%-20%, as the eye will tend to perceive the peak current light level rather than the average current light level. The LED emitters 18, 20 may be high power LEDs being capable of continuous use of powers above 1 watt. Further embodiments of the invention provide high power LEDs using powers above 5 watt. The currents being generated for emitting the colored light components R,G may be in a range above 5A. The chip 60 may, for example, integrate four LED emitters, each of them being capable of using a current of about 5A or higher per color resulting in a full current of about 20A.

The chip 60 comprising the array 52 of light emitters 18, 20 is configured for a high packing density of the light emitters 18, 20. LED dies are densely mounted on a substrate to provide for a high average luminance at a small aperture of the light emitters 18, 20.

Depending on the thermal dissipation properties, the chip 60 may integrate a plurality of light emitters 18, 20. Spacing between the light emitters 18, 20 may be in the range of about 100µm, for example. Array configurations comprising a plurality of R light components, a plurality of G components and a plurality of B light components may for example be integrated in the array 52. For example, two green light components G, two red light components R, two blue light components B and one amber light component A is an appropriate combination.

The array 52 may form a two dimensional lattice, e.g. a square, circular or hexagonal lattice. However, all other regular or irregular forms are possible.

A high packing density makes the array 52 more compact and provides a higher luminance within the same area compared to an array 52 of loosely connected individual LEDs. Besides, a densely packed array 52 provides a higher mixing degree at the light reception end 34 facilitating the mixture of light at the light mixer 14b. The mixing process is improved, the average luminance is improved and optical losses are reduced.

A further embodiment of the invention comprises separate chips having individual LED emitters integrated and being fixedly positioned on a common circuit board. The common circuit board or the single chip 60 may have a heat sink for dissipating thermal power generated by the array 52 of LED emitters 18, 20 to provide for a protection of the LED emitters 18, 20. The single chip 60 or the separate chips may be integrated on a printed circuit board comprising a LED control unit for controlling the array 52 of LEDs. A power supply signal and a control signal may be externally accessible to feed the LED chip set and the LED control unit and to control the emittance of light by the array 52 of light emitting diodes 18, 20.

The apparatus 10b further comprises a light sensor 54 which may be used to detect an intensity and/or a chromaticity of the mixed colored light beam 12 by measuring a leakage light 56 which is a small amount of the mixed colored light beam 12. The light sensor 54 may comprise photo sensors, photo diodes, CCD elements, light conductors, solar cells or other optically sensitive elements. The light sensor 54 can be arranged anywhere in the apparatus 10b where a sufficient amount of leakage light 56 may be detected and where the main part of the mixed colored light beam 12 is not disturbed.

In a preferred embodiment, the light sensor 54 is arranged in the light emitting space of the lens 44, for example attached to the lens holder 30b.

A light control signal 57 at a light control output 58 is provided by the light sensor 54 which light control signal 57 provides information related to intensity and/or mixing degree of the mixed colored light beam 12. The light control signal 57 may be used to adjust the moving direction 32 and the movement position x of the actuator 46 to control the size and/or intensity of the mixed colored light beam 12, for example, by a feedback loop.

The light control signal 57 may be used to control the dimming or color mixture degree of the light emitters 18, 20, for example by a feedback loop.

The light control signal 57 may be used to control the lens feature control signal controlling a refraction index of the fluid lens features 42 or to control a refraction index of the lens 44 when the lens 44 is implemented as a fluid lens.

Alternatively or additionally the light control signal 57 may control the mixing structures control signal to move specific mixing structures 38 from the plurality of mixing structures 38 in the optical path when the mixing structures 38 are movable arranged in the apparatus 10b. The lens control signal for controlling a movement of a plurality of lenses in the optical path, when a plurality of lenses 44 are movable attached to the lens holder 30b, may also be controlled by the light control signal 57.

Fig. 4 depicts the dependency between position x and beam size of the colored light beam 12. Depending on the focal point 72 which is a characteristic property of the lens 44, an axial movement 32 of the lens 44 varies the size of the mixed colored light beam 12 at the projection object 70. In a position x = -1 of the lens 44 with respect to the lens holder 30b, the focal point 72 is located before the projection object 70 such that a medium size mixed colored light beam 12 is generated. In a position x = 0, the focal point 72 is located directly at the projection object 70 such that the mixed colored light beam 12 has a narrow size. In a position x = 1, the focal point 72 is located behind the projection object 70, such that the mixed colored light beam 12 has, again, a medium size. In the positions x = 2 and x = -2, the focal point 72 is located behind (x=2) or before (x=-2) the projection object 70, respectively and has a large size. This dependency is depicted in Fig. 4 which illustrates the relation between different positions x of the (Fresnel) lens 44 with respect to the lens holder 30b and the corresponding beam size of the mixed colored light beam projected at the projection object 70. The projection object 70 may be a projection screen, a stage to be illuminated or a person, for example, an actor who shall be illuminated.

Fig. 5 shows an apparatus 10c for outputting a mixed colored light beam 12 according to another embodiment of the invention. The apparatus 10c comprises a plurality of light mixers 14b corresponding to the light mixer 14b as depicted in Fig. 3 with associated mixing structures 38. The light mixers 14b are used to mix a plurality of light beams R,G received from a plurality of light emitters 18, 20 which correspond to the light emitters depicted in Fig. 4.

A single lens 28 is used for collecting the light received from the plurality of light mixers 14b. The lens 28 is attached to a lens holder 30b which corresponds to the lens holder 30b depicted in Fig. 3. In this embodiment, the light of a multiple number of arrays 52 of light emitters 18, 20 is collected and focused, such that an intensity of the projected mixed colored light beam 12 is higher than an intensity of the light beam 12 projected by the apparatus 10b as depicted in Fig. 3. Instead of the single lens 28 a dome lens, a bi-convex lens, a plano-convex lens, a lens array, a Fresnel lens or lens array, a fluid lens or lens array, a holographic lens or lens array or any other patterned or structured optical material having the desired beam-forming or collimating characteristics may be used.

In a preferred embodiment, the light mixers 14b and the arrays 52 of light emitters 18, 20 are of the same type to facilitate a manufacturing process. Due to the form of the light mixers 14b, an arraying of the light mixers 14b is easily to achieve. The light mixers 14b may be arrayed in a rectangular, circular, hexagonal, octagonal or in any other regular or irregular structure. The lens holder 30b may be used to move the lens 28 or the lens array in lateral direction inside the mixed-colored light beam 12 in between the range of different light mixers 14b or outside the mixed-colored light beam 12 when a wide-angle light mixing is desired.

The base plate 68 may comprise a common power supply connector, a common LED light control signal connector and a common heat sink. The size of the light mixers 14b may be equal to the size of the light mixer 14b as depicted in Fig. 3 and the size of the apparatus 10c may correspond to the number of light mixers 14b integrated in the apparatus 10c times the size of an individual light mixer 14b.

Alternatively, the size of the apparatus 10c may correspond to the size of the apparatus 10b as depicted in Fig. 3. This may be achieved by reducing the size of the individual light mixers 14b compared to their original size.

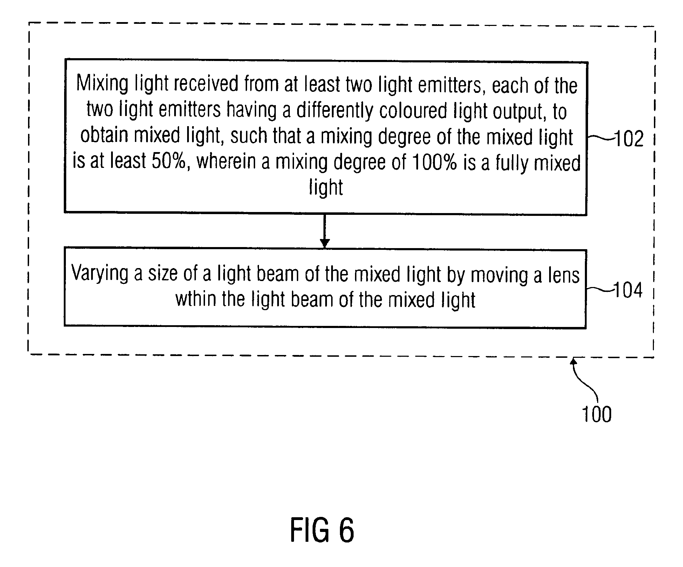

Fig. 6 shows a method 100 for outputting a mixed colored light beam. The method 100 comprises a first step 102 "mixing light received from at least two light emitters, each of the two light emitters having a differently colored light output to obtain mixed light, such that a mixing degree of the mixed light is at least 50%, wherein a mixing degree of 100% is a fully mixed light" and a second step 104 "varying a size of a light beam of the mixed light by moving a lens within the light beam of the mixed light".

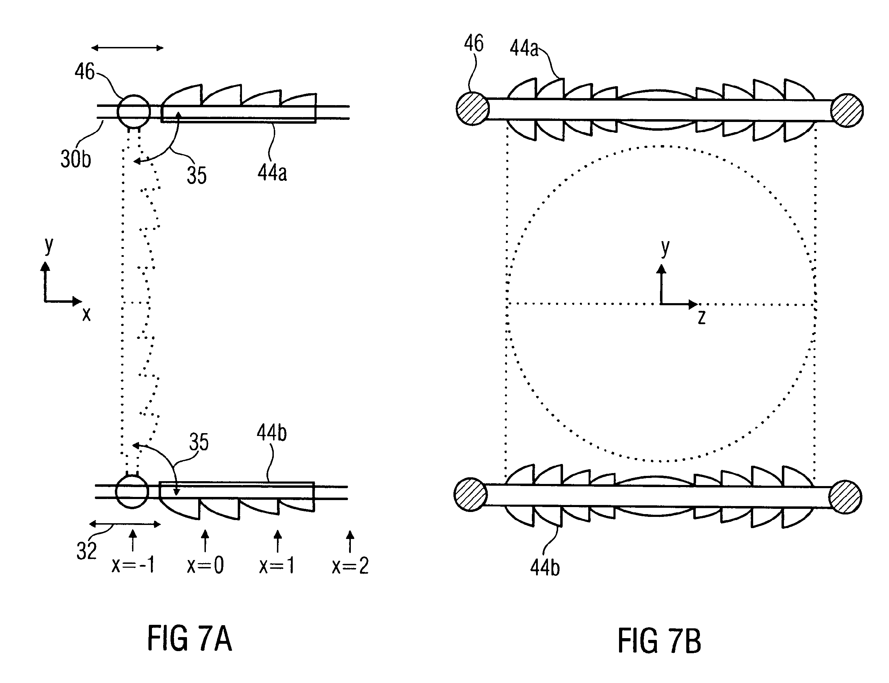

Fig. 7a shows a sectional view of a lens holder according to an embodiment of the invention. The sectional view depicts the plane formed by the x-axis and y-axis. The lens holder 30b may correspond to the lens holder 30b as depicted in Figs. 3 and 4. In this embodiment the lens 44 comprises two parts 44a, 44b which may be moved between inside and outside of the mixed-colored light beam 12 by a rotational movement 35 of the actuator 46. The actuator may additionally initiate the axial movement 32 to move the two parts 44a, 44b of the lens 44 in axial direction. This axial movement 32 is usually initiated when the two parts 44a, 44b are in contact to form the lens 44.

By the rotational movement 35 of the actuator 46 the two parts 44a, 44b of the lens 44 may be pushed into the optical path represented by the x-axis to activate the lens 44. By the axial movement 32 the lens formed by the two parts 44a, 44b may be moved along the optical axis x to adjust the focal point and the size of the mixed-colored light beam 12. The axial movement 32 and/or the rotational movement 35 may be controlled by the lens control signal.

When the lens 44 is moved outside the optical path, the apparatus 10b may be operated as a wide angle beam former without additionally absorbing light by the lens 44.

The lens 44 may also be manufactured in more than two parts which may be moved in the optical path. The lens 44 may also be a lens array comprising a plurality of micro-lenses which may be for example Fresnel lenses.

Fig. 7b shows a top view of the lens holder 30b depicted in Fig. 7a. The top view depicts the plane formed by the y-axis and z-axis. The two parts 44a, 44b of the lens 44 are opened such that the mixed-colored light beam 12 is not influenced by the lens 44.

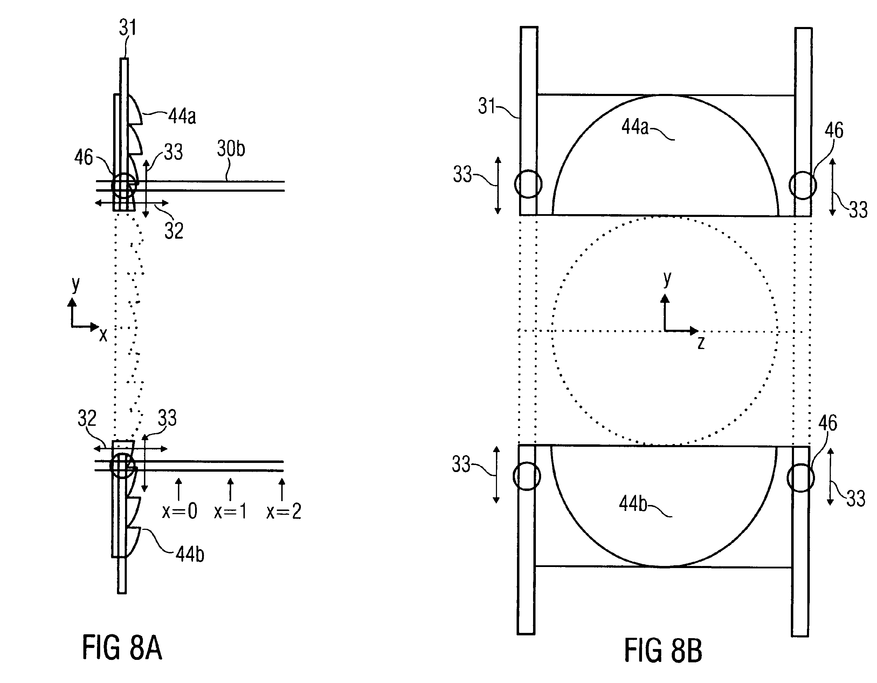

Fig. 8a shows a sectional view of a lens holder according to another embodiment of the invention. The sectional view depicts the plane formed by the x-axis and y-axis. The lens holder 30b may correspond to the lens holder 30b as depicted in Figs. 3 and 4. In this embodiment the lens 44 comprises two parts 44a, 44b which may be moved between inside and outside of the mixed-colored light beam 12 by a lateral movement 33 (y-axis) of the actuator 46. The actuator may additionally initiate the axial movement 32 to move the two parts 44a, 44b of the lens 44 in axial direction. This axial movement 32 is usually initiated when the two parts 44a, 44b are in contact to form the lens 44.

By the lateral movement 33 of the actuator 46 the two parts 44a, 44b of the lens 44 may be laterally adjusted into the optical path represented by the x-axis to activate the lens 44. By the axial movement 32 the lens formed by the two parts 44a, 44b may be moved along the optical axis x to adjust the focal point and the size of the mixed-colored light beam 12. The axial movement 32 and/or the lateral movement 33 may be controlled by the lens control signal.

The parts 44a, 44b of the lens 44 may be attached to four guide rods 31 which can be moved by the actuator 46 in lateral direction y. The actuator 46 may be configured to mechanically move the guide rods 31. Alternatively a manual movement of the guide rods 31 is possible. The lens 44 or the parts 44a, 44b of the lens 44, respectively, may be exchanged by unlocking the actuator, removing the lens 44 by the guide rods 31 and inserting a new lens 44 with a different optical characteristics, for example a dome lens, a bi-convex lens, a plano-convex lens, a lens array, a Fresnel lens or lens array, a fluid lens or lens array, a holographic lens or lens array or any other patterned or structured optical material having the desired beam-forming or collimating characteristics. In the embodiment depicted in Fig. 8a the lens 44 has a round form. This embodiment does not exclude other forms of the lens 44. The lens 44 may, for example, have a squared or rectangular form which facilitates attaching the lens to the guide rods 31.

When the lens 44 is moved outside the optical path, the apparatus 10b may be operated as a wide angle beam former without additionally absorbing light by the lens 44.

The lens 44 may also be manufactured in more than two parts which may be moved in the optical path. The lens 44 may also be a lens array comprising a plurality of micro-lenses which may be for example Fresnel lenses.

In another embodiment the lens 44 is made of one part and may be laterally moved (by a transversal movement) inside or outside the optical path. The lens 44 may also be moved by a rotational movement inside or outside the optical path.

Fig. 8b shows a top view of the lens holder 30b depicted in Fig. 8a. The top view depicts the plane formed by the y-axis and z-axis. The two parts 44a, 44b of the lens 44 are pushed open such that the mixed-colored light beam 12 is not influenced by the lens 44.

## Claims

1. Apparatus (10) for outputting a mixed-colored light beam (12), comprising:
a light mixer (14) being adapted to mix light (16) received from at least two light emitters (18, 20), each of the two light emitters (18, 20) having a differently colored (R,G) light output (22, 24), wherein the mixer (14) is adapted to mix the received light (16) so that a mixing degree of mixed light (26) output by the mixer (14) is at least 50%, wherein a mixing degree of 100% is a fully mixed light; and
a lens (28) being spaced apart from the light mixer (14), wherein the lens (28) is attached to a lens holder (30) in such a way that the lens (28) can be moved (32) with respect to the light mixer (14) in order to vary a size of the mixed-colored light beam (12) output by the lens (28).

2. The apparatus (10) according to claim 1 in which the mixer (14) is formed of a material having a refraction index, which is higher than a refraction index of air.

3. The apparatus (10) according to claim 1 or claim 2 in which the mixer (14) is formed as a structure having an increasing cross-sectional area from a light reception end (34) to a light output end (36).

4. The apparatus (10) according to one of the claims 1 to 3 in which the mixer (14) has a mixing structure (38) at an end (40) facing the lens (28).

5. The apparatus (10) according to claim 4 in which the mixing structure (38) is a diffuser having a plurality of lens features (42).

6. The apparatus according to one of the claims 1 to 5 in which the lens (28) is a Fresnel lens (44) having a collective characteristics or in which the lens (28) is an array of lenses having a collective characteristics.

7. The apparatus (10) according to one of the claims 1 to 6 in which the lens holder (30) comprises an actuator (46) and a control input (48) for controlling the actuator (46) in response to a control signal (50) received via the control input (48).

8. The apparatus (10) according to claim 7 in which the actuator (46) is adapted fo move the lens (28) between inside and outside of the mixed-colored light beam (12).

9. The apparatus (10) according to one of the claims 1 to 8, further comprising an array (52) of light emitters (18, 20) arrayed with respect to a receiving end (54) of the mixer (14) so that emitted light (56) is coupled into the mixer (14).

10. The apparatus (10) according to claim 9 in which the light emitters (18, 20) are LED emitters (58) emitting light of different colors (R,G), the LED emitters (58) being integrated on a single chip (60) or being separate chips (62) fixedly positioned on a common circuit board (64).

11. The apparatus (10) according to claim 9 or claim 10 in which the light emitters (18, 20) are formed such that a current consumption is above 5A.

12. The apparatus (10) according to one of the claims 7 to 10, further comprising a light sensor (54) for receiving a partial flux (56) of the mixed-colored light beam (12); and wherein the apparatus (10) is adapted to provide the control signal (50) depending on the partial flux (56) of the mixed-colored light beam (12) received by the light sensor (54).

13. Method (100) for outputting a mixed colored light beam, comprising:
mixing light received from at least two light emitters, each of the two light emitters having a differently colored light output, to obtain mixed light, such that a mixing degree of the mixed light is at least 50%, wherein a mixing degree of 100% is a fully mixed light (102); and
varying a size of a light beam of the mixed light by moving a lens within the light beam of the mixed light (104).

14. Apparatus (10) for outputting a mixed-colored light beam (12), comprising:
mixing means (14) for mixing light (16) received from at least two light emitters (18, 20), each of the two light emitters (18, 20) having a differently colored (R,G) light output (22, 24), wherein the mixing means (14) is adapted to mix the received light (16) so that a mixing degree of mixed light (26) output by the mixing means (14) is at least 50%, wherein a mixing degree of 100% is a fully mixed light; and
collecting means (28) for collecting light being spaced apart from the mixing means (14), wherein the collecting means (28) is attached to holding means (30) in such a way that the collecting means (28) can be moved with respect to the mixing means (14) in order to vary a size of the mixed-colored light beam (12) output by the collecting means (28).

15. Apparatus (10c) for outputting a mixed colored light beam (12), comprising:
a plurality of light mixers (14b) according to claim 1 being arranged in an array structure; and
a lens (28) being spaced apart from the plurality of light mixers (14b), wherein the lens (28) is attached to a lens holder (30b) in such a way that the lens (28) can be moved (32) with respect to the plurality of light mixers (14b) in order to vary a size of the mixed colored light beam (12) output by the lens (28).
